# EUROPÄISCHE PATENTANMELDUNG

(11) **EP 2 360 053 A1**
(43) Veröffentlichungstag der Anmeldung: **24.08.2011**
(21) Anmeldenummer: 10014834.5
(22) Anmeldetag: 22.11.2010
(51) Int. Cl.: B60P 1/28, B60H 1/00

(54) **Muldenkipper mit beheizbarer Mulde**

(30) Priorität: 23.02.2010 DE 102010008916
(71) Anmelder: Liebherr-Hydraulikbagger GmbH, 88457 Kirchdorf/Iller (DE)
(72) Erfinder: Westner, Harald, Dipl.-Ing., 87700 Memmingen (DE)
(74) Vertreter: Laufhütte, Dieter

(57) **Zusammenfassung**

Die vorliegende Erfindung betrifft einen Muldenkipper mit einer Kippmulde (80) und wenigstens einem Heizsystem (100,110) zur Beheizung bzw. Erwärmung der Mulde, insbesondere der Bodenfläche der Mulde, wobei das Wärmeübertragungsmedium des Heizkreislaufs ein flüssiges Trägermedium ist.

## Beschreibung

Die vorliegende Erfindung betrifft einen Muldenkipper mit einer Kippmulde und wenigstens einem Heizsystem zur Beheizung bzw. zur Erwärmung der Mulde, insbesondere zur Beheizung/Erwärmung der Bodenfläche der Mulde.

Muldenkipper, auch Dumper oder Mining Trucks genannt, sind geländegängige Nutzfahrzeuge, die sich zum Transport von gelösten Bodenteilen oder losen Schuttgütern eignen. Das Nutzfahrzeug umfaßt hierzu eine auf dem Fahrzeugrahmen montierte neigbare Kippmulde zur Aufnahme der Transportgüter.

Zur Verbesserung und Optimierung der Entladung eines bindigen Materials aus der Kippmulde ist es bekannt, eine Muldenheizung unter Verwendung der durch das Antriebsaggregat abgegebenen Abgase zu realisieren. Die erzeugte Erwärmung der Ladefläche erweist sich insbesondere für lehmartige Ladegüter, gefrorene Ladegüter oder allgemein sämtliche Güter, die klebrige oder gefrierfähige Substanzen enthalten, als vorteilhaft.

Der technische Fortschritt bei der Entwicklung der Antriebsaggregate für derartige Muldenkipper führt jedoch zu technischen Schwierigkeiten bei der Umsetzung einer abgasbeheizten Kippmulde. Insbesondere Aggregate neuerer Motorengenerationen produzieren weder genügend heißes Abgas noch sind die abgegebenen Abgasgegendrücke für die in der Kippmulde verlegten Abgasrohrlängen ausreichend. Dies führt dazu, dass abgasbeheizte Heizsysteme für eine Kippmulde eines Muldenkippers für zukünftige Fahrzeuggenerationen ungeeignet sind.

Im Hinblick auf die vorgenannte technische Problemstellung ist es Aufgabe der vorliegenden Erfindung, dem Fachmann einen alternativen Lösungsweg für eine beheizbare Kippmulde aufzuzeigen.

Diese Aufgabe wird durch einen Muldenkipper gemäß den Merkmalen des Anspruchs 1 gelöst. Demnach weist ein Muldenkipper eine Kippmulde und wenigstens ein Heizsystem zur Beheizung bzw. Erwärmung der Mulde auf. Erfindungsgemäß ist das Wärmeübertragungsmedium wenigstens eines Heizsystemkreislaufs zur Beheizung der Mulde ein flüssiges Trägermedium. Der Heizkreislauf bzw. die Leitungen des Heizsystems erstrecken sich über die zu beheizende Muldenfläche, wodurch das flüssige Trägermedium seine Wärme an die Muldenfläche abgibt. Anstatt des abgasbeheizten bekannten Heizsystems für Muldenkipper wird folglich erfindungsgemäß ein flüssiges Medium eingesetzt, um die Kippmulde, insbesondere deren Bodenfläche, aufzuwärmen bzw. aufzuheizen, indem die Wärme des flüssigen Trägermediums an die zu beheizende Muldenfläche abgegeben wird.

Vorteilhafterweise ist das Wärmeübertragungsmedium ein Wasser-Glykol-Gemisch. Alternativ ist auch die Verwendung von Hydrauliköl als Wärmeübertragungsmedium von Vorteil.

Vorteilhafterweise ist wenigstens ein zentraler Wärmeerzeuger des Heizkreislaufs ein flüssigkeitsgekühltes Aggregat des Muldenkippers. Das flüssige Wärmeübertragungsmedium des Heizsystems ist bevorzugt durch wenigstens ein flüssigkeitsgekühltes Aggregat des Antriebsstrangs des Muldenkippers geführt und wird entsprechend durch die Abwärme des Aggregats erhitzt. Alternativ kann eine eigenständige, speziell für das Heizsystem ausgelegte Wärmequelle bzw. ein zentraler Wärmeerzeuger implementiert sein. Aus Kosten- und Energieeffizienzgründen wird jedoch bevorzugt auf vorhandene Wärmequellen, wie beispielsweise das Antriebsaggregat des Muldenkippers, zurückgegriffen.

Möglich ist es auch, dass wenigstens ein Heizkreislauf des Heizsystems an wenigstens einen bestehenden Flüssigkeitskreislauf des Muldenkippers gekoppelt ist. Beispielsweise ist wenigstens ein Heizkreislauf mit wenigstens einem bestehenden Kühlkreislauf des Antriebsaggregats des Muldenkippers gekoppelt. Das flüssige Übertragungsmedium im bestehenden Kühlkreislaufs bzw. Flüssigkeitskreislaufs des Muldenkippers wird in den Heizkreislauf des Heizsystems geleitet und ermöglicht die Erwärmung bzw. Beheizung der Kippmulde. Zweckmäßig ist die Verwendung des Wärmeübertragungsmediums des Kühlkreislaufs des flüssigkeitsgekühlten Muldenkipper-Antriebsaggregats im Heizkreislauf des Heizsystems. Vereinfacht ausgedrückt wird ein bestehender Flüssigkeits- bzw. Kühlkreislauf um die Heizfunktion der Mulde erweitert, indem das heiße Wärmeübertragungsmedium zur Kippmulde umgeleitet wird. Die Temperatur bzw. der Druck des Wärmeübertragungsmediums in den Kreislaufleitungen sind ausreichend, um eine wirkungsvolle Erwärmung bzw. Beheizung der Ladefläche der Kippmulde zu gewährleisten.

Um die Sicherheit des Antriebssystems des Muldenkippers nicht zu gefährden, ist es zweckmäßig, die Kopplung zwischen wenigstens einem Flüssigkeitskreislauf/Kühlkreislauf und wenigstens einem Heizkreislauf nach dem Prinzip eines Zweikreissystems umzusetzen. Dies erfolgt beispielsweise über den Einsatz eines Wärmetauschers zwischen beiden Kreisläufen, der eine Wärmeübertragung vom Flüssigkeitskreislauf in den Heizkreislauf des Heizsystems ermöglicht. Es werden demnach zwei selbständige Kreisläufe mit eigenem flüssigem Trägermedium gebildet, die mittels des Wärmetauschers zum Wärmeaustausch gekoppelt sind. Die Schaffung eines separaten Heizkreislaufs stellt sicher, dass Beschädigungen an der Mulde nicht zum Ausfall bzw. zur Beeinträchtigung der Betriebsfähigkeit der Maschine führen, da der Kühlkreislauf der Antriebsmaschine weiterhin autark arbeitet.

Zur Förderung der Flussmenge innerhalb des Heizkreislaufs ist wenigstens eine motorbetriebene Umlaufpumpe im Heizkreislauf implementiert. Der Antrieb der Umlaufpumpe erfolgt insbesondere über ein hydraulisches oder elektrisches Antriebsaggregat.

Um das Heizsystem für die Kippmulde des Muldenkippers nur bei Bedarf zu aktivieren, ist wenigstens ein Absperrorgan vorgesehen, dass bevorzugt im Heizkreislauf und/oder im Flüssigkeitskreislauf/Kühlkreislauf des Muldenkippers angeordnet ist. Die Betätigung des Absperrorgans erfolgt vorteilhafterweise über eine geeignete Mechanik oder entsprechende zusätzliche Stellorgane. Somit lässt sich das Heizsystem bequem über die allgemeine Steuerkonsole des Muldenkippers betätigen oder optional direkt am Absperrorgan über die dafür vorgesehene Mechanik aktivieren bzw. deaktivieren.

Um eine gleichmäßige Erwärmung der Bodenfläche und/oder der Wandflächen der Kippmulde zu erreichen, ist wenigstens ein Zuführkanal und wenigstens ein Rückführkanal des Heizsystems innerhalb der Bodenfläche und/oder der Wandfläche der Mulde angeordnet. Die Unterteilung des Heizkanals in Vorder- und Rücklauf sichert eine gleichmäßige Zirkulation des flüssigen Wärmeübertragungsmediums durch die in die Muldenfläche integrierte Kanalführung.

In einer vorteilhaften Ausgestaltung sind mittels des Heizsystems weitere Maschinenkomponenten beheizbar. Beispielweise ist die Erwärmung/Beheizung beliebiger Transport- und Ladeflächen, Arbeitsflächen montierter Arbeitsgeräte oder dergleichen denkbar.

Denkbar ist es auch, dass die Heizfunktion des Muldenkippers umkehrbar ist, d.h. es wird eine kühlende Wirkung des Systems erzielt um die Temperatur der Muldenfläche gezielt auf ein bestimmtes Temperaturniveau herunterzukühlen.

Weitere Vorteile, Merkmale und Einzelheiten der Erfindung sollen nun anhand eines in den Zeichnungen dargestellten Ausführungsbeispiels näher erläutert werden. Es zeigen:
- Figur 1:: eine Prinzipskizze der erfindungsgemäßen Muldenheizung und
- Figur 2:: eine perspektivische Darstellung der Mulde mit integrierter Heizung.

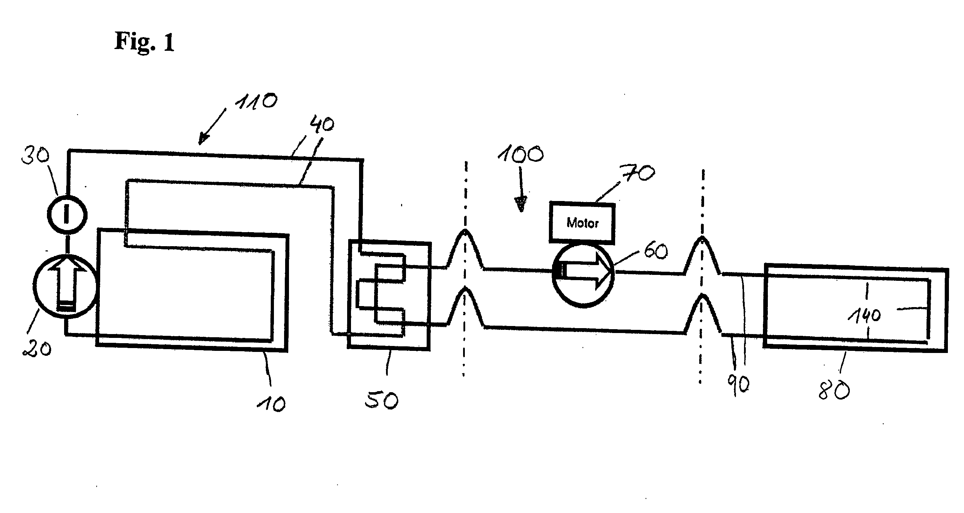

Figur 1 zeigt eine Prinzipskizze des erfindungsgemäßen Heizsystems für einen Muldenkipper. Zur Optimierung der Systemsicherheit ist das gesamte Kreislaufsystem als Zweikreissystem ausgeführt. Der erste Flüssigkeitskreislauf 110 zeigt den bestehenden Kühlkreislauf zur Kühlung der Antriebsmaschine 10 des Muldenkippers. Das Antriebsaggregat 10 des Muldenkippers umfaßt beispielsweise einen Dieselmotor oder ein sonstiges flüssigkeitsgekühltes Antriebsaggregat. Die Förderung des Wärmeübertragungsmediums durch die Schlauchleitungen 40 wird durch die Pumpe 20 bewerkstelligt. Diese kann beispielsweise motorseitig montiert bzw. integriert sein oder durch eine externe Vorrichtung angetrieben werden. Über die Schlauchleitungen 40, die einen Vor- und Rücklauf darstellen, wird das Wärmeübertragungsmedium zum Wärmetauscher 50 befördert.

Des Weiteren steht ein autarker Heizkreislauf 100 zur Verfügung, in dessen Leitungen 90 ein flüssiges Wärmeübertragungsmedium, beispielsweise ein Wasser-Glykol-Gemisch oder ein Hydrauliköl, zirkuliert. Mittels des Wärmetauschers 50 kann die vom Antriebsaggregat 10 erzeugte Abwärme trotz getrennt abgesicherter Umlaufsysteme 110, 100 an das flüssige Wärmeübertragungsmedium des Heizkreislaufs 100 abgegeben werden. Die Zirkulation des Mediums in den Leitungen 90 wird durch die Umlaufpumpe 60 gefördert, die über das Antriebselement 70 betrieben wird. Als geeignete Ausführungen des Antriebselements 70 seien ein hydraulischer bzw. elektrischer Antriebsmotor genannt. Die über den Wärmetauscher 50 erhaltene Wärme wird also mittels der Umlaufpumpe 60 zur Mulde 80 des Muldenkippers gefördert und gewährleistet eine gleichmäßige und zufriedenstellende Erwärmung bzw. Beheizung der Bodenfläche der Mulde 80.

Zur optionalen Aktivierung bzw. Deaktivierung der Muldenheizung steht das Absperrorgan 30 zur Verfügung. Dieses schränkt bei Bedarf den Zufluß der Kühlflüssigkeit in Richtung des Wärmetauschers 50 ein oder unterbindet den Zufluß vollständig. Das Heizsystem wird demnach deaktiviert und die Zirkulation im Kühlkreislauf 110 beschränkt sich auf das Antriebsaggregat 10. Ferner kann dem Absperrorgan eine Regelfunktion zur Regulierung der Heiztemperatur zukommen.

Die vorteilhafte Umsetzung als Zweikreissystem mit den autarken Kreisläufen 110, 100 stellt sicher, dass Beschädigungen des Heizkreislaufsystems 100 an der Mulde nicht zur Beeinträchtigung der Betriebsfähigkeit des Muldenkippers führen, da der Kühlkreislauf 110 der Antriebsmaschine autark bleibt. Die Heizkanäle 140 des Heizkreislaufs 100 können in die Bodenfläche und/oder die Wandfläche der Mulde 80 integriert werden oder alternativ an der Muldenfläche angebaut werden.

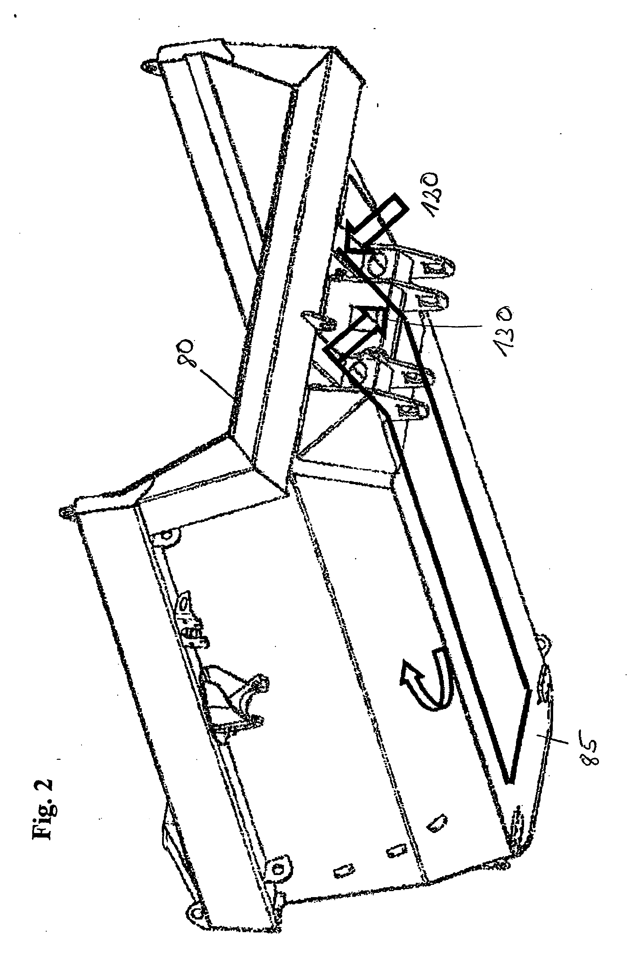

Figur 2 zeigt eine perspektivische Darstellung der Mulde 80. Das Heizkanalsystem in der Bodenfläche 85 der Mulde 80 weist einen Zuführkanal 120 sowie einen Rückführkanal 130 auf. Um eine besonders gleichmäßige und effektive Erwärmung bzw. Beheizung der Grundfläche 85 der Mulde 80 sicherzustellen, ist bevorzugt jeweils ein Heizkanal am Rand der Grundfläche 85 in Längsrichtung angeordnet, wobei die beiden Heizkanäle über einen Querkanal miteinander in Verbindung stehen. Hierdurch wird eine kontinuierliche Zirkulation des flüssigen Wärmeübertragungsmediums im Bodenflächenbereich der Mulde 80 erreicht, wobei das Medium über die separierten Zuführ- und Rückführungskanäle 120, 130 an das Heizsystem zurückgeführt bzw. vom Heizsystem an die Mulde abgebbar ist. Die Zirkulationsrichtung des flüssigen Trägermediums durch die Heizkanäle ist beliebig zu wählen.

Durch die Erfindung soll eine verbesserte bzw. optimierte Entladungsmöglichkeit eines bindigen Materials aus der Kippmulde 80 geschaffen werden. Dies gilt insbesondere für lehmartige Ladegüter, gefrorene Ladegüter oder allgemein gesprochen für alle Güter, die klebrige oder gefrierfähige Substanzen enthalten. Durch die Erwärmung der Muldenkontaktfläche kommt es zur Bildung einer gleitfähigen Schicht, z. B. einem Wasserfilm, die es ermöglicht, ein sicheres und annähernd 100% sauberes Entladen beim Kippvorgang zu ermöglichen.

Die erfindungsgemäße Ausführung des Muldenheizsystems garantiert dem Hersteller, zukünftige Muldenkipper mit Antriebsaggregaten der kommenden Motorengenerationen, d.h. abgasfreundlichere Generationen, auch weiterhin mit effizienten und wirkungsvollen Muldenheizsystemen ausstatten zu können.

## Patentansprüche

1. Muldenkipper mit einer Kippmulde und wenigstens einem Heizsystem zur Beheizung/Erwärmung der Mulde, insbesondere der Bodenfläche der Mulde,
**dadurch gekennzeichnet,**
**dass** das Wärmeübertragungsmedium des Heizkreislaufs ein flüssiges Trägermedium ist.

2. Muldenkipper nach Anspruch 1, **dadurch gekennzeichnet, dass** das Wärmeübertragungsmedium ein Wasser/Glycol-Gemisch ist.

3. Muldenkipper nach Anspruch 1, **dadurch gekennzeichnet, dass** das Wärmeübertragungsmedium ein Hydrauliköl ist.

4. Muldenkipper nach einem der vorhergehenden Ansprüche, **dadurch gekennzeichnet, dass** wenigstens ein zentraler Wärmeerzeuger des Heizkreislaufs ein flüssigkeitsgekühltes Antriebsaggregat des Muldenkippers, insbesondere ein Dieselaggregat ist.

5. Muldenkipper nach einem der vorhergehenden Ansprüche, **dadurch gekennzeichnet, dass** wenigstens ein Heizkreislauf mit wenigstens einen bestehenden Flüssigkeitskreislauf, insbesondere mit dem Kühlkreislauf des Muldenkippers, gekoppelt ist.

6. Muldenkipper nach einem der Anspruch 5, **dadurch gekennzeichnet, dass** die Kopplung der Kreisläufe mittels wenigstens einem Wärmetauscher erfolgt.

7. Muldenkipper nach einem der vorhergehenden Ansprüche, **dadurch gekennzeichnet, dass** innerhalb des Heizkreislaufs wenigstens eine motorbetriebene Umlaufpumpe angeordnet ist.

8. Muldenkipper nach einem der vorhergehenden Ansprüche, **dadurch gekennzeichnet, dass** ein Absperrorgan vorgesehen ist, das mechanisch oder durch Stellorgane betätigbar ist.

9. Muldenkipper nach einem der vorhergehenden Ansprüche, **dadurch gekennzeichnet, dass** in der Bodenfläche der Mulde wenigstens ein Zuführkanal und wenigstens ein Rückführkanal des Heizsystems angeordnet ist.
